# EUROPEAN PATENT APPLICATION

(11) **EP 4 357 002 A1**
(43) Date of publication of application: **24.04.2024**
(21) Application number: 22839615.6
(22) Date of filing: 25.08.2022
(51) Int. Cl.: B01D 53/14

(54) **APPARATUS FOR FORMING CASCADE-TYPE ARTIFICIAL FOREST**

(30) Priority: 09.08.2022 KR 20220099378
(71) Applicant: Lowcarbon Co., Ltd., Seongjeon-myeon, Gangjin-gun Jeollanam-do 59205 (KR)
(72) Inventor: SONG, Bong Kwan, Jeollanam-do 58323 (KR); JUNG, Ha Eun, Jeollanam-do 58616 (KR)
(74) Representative: M. Zardi & Co S.A.
(86) International application number: PCT/KR2022/012742
(87) International publication number: WO 2024/034725

(57) **Abstract**

Proposed is a cascaded apparatus for forming an artificial forest. According to an embodiment, the cascaded apparatus includes a cascaded flow path assembly having a plurality of partition plates horizontally stacked in multiple stages in an inner portion of a casing having a cuboid shape, the plurality of partition plates being spaced apart from each other at a predetermined distance, the plurality of partition plates having left and right ends staggered with respect to each other such that the plurality of partition plates is in communication with each other, and the cascaded flow path assembly formed thereby having an internal flow path that has a zigzag shape, and includes an air suction portion connected to a lower first side of the cascaded flow path assembly and configured to intake surrounding air, thereby guiding suctioned air to flow upward along the internal flow path. Furthermore, the cascaded apparatus includes a mixture solution storage portion which is provided at a lower portion of the cascaded flow path assembly and which stores a basic alkali mixture solution of specific components capturing carbon dioxide in air by being in contact with air so that a chemical reaction occurs, the mixture solution storage portion being configured to supply the basic alkali mixture solution to an upper portion of the cascaded flow path assembly when air is suctioned into the air suction portion, and the mixture solution storage portion being configured to guide the basic alkali mixture solution to be in contact with the air as the basic alkali mixture solution flows downward along the internal flow path of the cascaded flow path assembly due to weight of the basic alkali mixture solution, and includes an air discharge portion provided at the upper portion of the cascaded flow path assembly and configured to discharge remaining air which passes through the internal flow path and in which carbon dioxide is removed to a portion around the air discharge portion.

## Description

### Technical Field

The present disclosure relates to a cascaded apparatus for forming an artificial forest. More particularly, the present disclosure relates to a cascaded apparatus for forming an artificial forest, the cascaded apparatus being configured to drop a basic alkali mixture solution along a gravity direction in multiple stages in a cascade pattern such that carbon dioxide in surrounding air being in contact with the basic alkali mixture solution is captured and converted into other useful carbon resources so that carbon dioxide in the air is removed, and the cascaded apparatus being also configured to continuously supply artificially purified clean air to the surrounding atmosphere.

### Background Art

Recently, various natural disasters are rapidly increasing around the world due to heat waves, great floods, huge forest fires, climate change, and so on. The increase in carbon dioxide in the atmosphere is considered as the main cause of this rapid increase in natural disasters.

The global atmospheric carbon dioxide concentration reached an all-time high in 2020, and each country's carbon emission reduction plans fell short of expectations. Furthermore, it is predicted that carbon emissions will increase by 16% by 2030 compared to 2010. If this trend continues, it is analyzed that it will be difficult to achieve the international target of suppressing the increase in global temperature by 1.5 degrees (°C) higher than before industrialization, and that the global temperature will rise by 2.7 degrees (°C) by 2100.

In addition, according to the World Meteorological Organization (WMO), the average global atmospheric carbon dioxide concentration reached 413.2 ppm in 2020, which is 2.5 ppm higher than in 2019 and which is an all-time high. The increase in carbon dioxide concentration in 2021 showed a rapid increase, which exceeds the average (2.4 ppm) of the past 10 years. Such carbon dioxide concentration is 149% of the carbon dioxide concentration in pre-industrial level (1750).

Experts point out that the reason the carbon dioxide in the atmosphere continues to increase is because of the characteristic that carbon dioxide stays in the atmosphere for up to 200 years once carbon dioxide is emitted. Due to this characteristic, in order for the world to face natural disasters caused by carbon dioxide, there is a growing need to reduce carbon emissions more rapidly.

In addition, the WMO is concerned that the carbon absorption capacity of the land ecosystem is decreasing since the Amazon area, which has absorbed carbon, has changed into a source of carbon emissions due to the development by the Brazilian government.

As described above, while carbon dioxide is rapidly increasing worldwide and the need to reduce carbon dioxide is recognized, the carbon absorption capability of the land ecosystem alone has limitation of properly performing the carbon reduction function.

Meanwhile, although a technology to remove foreign substances such as dust and motes from air has been actively developed, a technology to capture carbon dioxide continuously and utilize captured carbon dioxide generated according to the capture of carbon dioxide has not been developed well, so that a technological development thereof is urgently required.

### Disclosure

### Technical Problem

Accordingly, the present disclosure has been made keeping in mind the above problems occurring in the related art, and an objective of the present disclosure is to provide an apparatus for forming an artificial forest, the apparatus being capable of continuously reducing carbon dioxide in air so that a surrounding air quality is cleaned and formed into a clean and comfortable environment.

In addition, another objective of the present disclosure is to provide an apparatus for forming an artificial forest, the apparatus being configured to drop a basic alkali mixture solution along a gravity direction in multiple stages in a cascade pattern such that carbon dioxide in surrounding air being in contact with the basic alkali mixture solution is captured and converted into other useful carbon resource so that carbon dioxide in air is removed.

In addition, still another objective of the present disclosure is to provide an apparatus for forming an artificial forest, the apparatus being configured to measure a carbon dioxide concentration before and after carbon dioxide in air is captured and to display the carbon dioxide concentration on a display portion, the apparatus being configured to provide changes in a carbon dioxide concentration in air to a local government or a manager so that the local government or the manager is capable of appropriately using the changes in the carbon dioxide concentration in air, and the apparatus being capable of appropriately responding to the changes in the carbon dioxide concentration.

In addition, yet another objective of the present disclosure is to provide an apparatus for forming an artificial forest, the apparatus being configured to capture carbon dioxide by using a basic alkali mixture solution that solves various disadvantages of an aqueous alkanolamine solution which is a carbon dioxide absorber and which is widely used in a conventional technology, thereby being capable of securing economic feasibility compared to the conventional technology.

The technical problems to be solved by the present disclosure are not limited to the above-mentioned problems, and other problems which are not mentioned will be clearly understood by those skilled in the art from the following description.

### Technical Solution

In order to achieve the above objectives, according to an embodiment of the present disclosure, there is provided a cascaded apparatus for forming an artificial forest, the cascaded apparatus including: a cascaded flow path assembly having a plurality of partition plates horizontally stacked in multiple stages in an inner portion of a casing having a cuboid shape, the plurality of partition plates being spaced apart from each other at a predetermined distance, the plurality of partition plates having left and right ends staggered with respect to each other such that the plurality of partition plates is in communication with each other, and the cascaded flow path assembly formed thereby having an internal flow path that has a zigzag shape; an air suction portion connected to a lower first side of the cascaded flow path assembly and configured to intake surrounding air, thereby guiding suctioned air to flow upward along the internal flow path; a mixture solution storage portion which is provided at a lower portion of the cascaded flow path assembly and which stores a basic alkali mixture solution of specific components capturing carbon dioxide in air by being in contact with air so that a chemical reaction occurs, the mixture solution storage portion being configured to supply the basic alkali mixture solution to an upper portion of the cascaded flow path assembly when air is suctioned into the air suction portion, and the mixture solution storage portion being configured to guide the basic alkali mixture solution to be in surface contact with the air as the basic alkali mixture solution flows downward along the internal flow path of the cascaded flow path assembly due to weight of the basic alkali mixture solution; and an air discharge portion provided at the upper portion of the cascaded flow path assembly and configured to discharge remaining air which passes through the internal flow path and in which carbon dioxide is removed to a portion around the air discharge portion.

In addition, according to an embodiment, the mixture solution storage portion may be further provided with a circulation pump, and the circulation pump may be configured to supply the basic alkali mixture solution stored in the mixture solution storage portion to the upper portion of the cascaded flow path assembly through a mixture solution supply pipe.

In addition, according to an embodiment, as a through-hole is formed alternately in the left and right ends of each of the plurality of partition plates of the cascaded flow path assembly such that each through-hole is staggered with respect to each other, the cascaded flow path assembly may have the internal flow path that generally has the zigzag shape, and a drain guide plate having a first end coupled to each of the plurality of partition plates and having a second end which has a free end shape that is bent downward via the through-hole may be provided at each through-hole.

In addition, according to an embodiment, a pattern may be formed on the plurality of partition plates of the cascaded flow path assembly, so that a contact area between the basic alkali mixture solution and the suctioned air may be increased.

In addition, according to an embodiment, the air suction portion may be provided with at least one of a thermometer, a hygrometer, and a carbon dioxide concentration meter that are for measuring a temperature, a humidity, or a carbon dioxide concentration value of suctioned surrounding air, and may be further provided with a preheater for preheating the suctioned air to a temperature suitable for a reaction with the basic alkali mixture solution.

In addition, according to an embodiment, the air discharge portion may be provided with at least one of a flow meter, a thermometer, a hygrometer, and a carbon dioxide concentration meter that are for measuring a flow rate, a temperature, a humidity, or a carbon dioxide concentration value of air in which carbon dioxide is removed.

In addition, according to an embodiment, a first side of the mixture solution storage portion may be further provided with a makeup water storage portion for supplementing water evaporated from the basic alkali mixture solution.

In addition, according to an embodiment, an air suction fan may be further mounted at a part of a flow path of the air discharge portion or the air suction portion.

In addition, according to an embodiment, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an embodiment, a carbon dioxide reactant may include sodium carbonate (Na₂CO₃) or sodium bicarbonate (NaHCO₃).

In addition, according to an embodiment, a bottommost of the plurality of partition plates of the cascaded flow path assembly and an opened upper portion of the mixture solution storage portion may be in communication with each other, and the air suction portion may be connected to a space portion between the bottommost of the plurality of partition plates of the cascaded flow path assembly and the mixture solution storage portion, so that air may be guided to flow upward along the internal flow path through a through-hole of the bottommost of the plurality of partition plates of the cascaded flow path assembly after air suctioned from an outside is in contact with the basic alkali mixture solution contained in the mixture solution storage portion.

In addition, according to an embodiment, the mixture solution storage portion may be further connected to a separator configured to collect a reactant including carbon dioxide captured in the basic alkali mixture solution and configured to separate a carbon dioxide reactant and a waste solution from the reactant, and may be further connected to a carbon resource reservoir storing the carbon dioxide reactant that is separated so as to be recycled.

In addition, according to an embodiment, an electric compartment portion may be further provided at a first side of the cascaded flow path assembly, and the electric compartment portion may be configured to measure and control various parameter values including temperatures, humidities, flow rates, flow velocities, concentrations of air, and the basic alkali mixture solution that are suctioned, supplied, or discharged through the cascaded flow path assembly.

In addition, according to an embodiment, the electric compartment portion may be further connected to various sensors and a database, and may be configured to store data measured by the various sensors in the database or to remotely transmit the data to a server or a terminal that a user wants in real time or at a predetermined period.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, since carbon dioxide is capable of being reduced by capturing carbon dioxide in air like a tree captures carbon dioxide, there is an advantage that the air quality around a region where a system of the present disclosure is established is improved.

In addition, according to an embodiment of the present disclosure, by using the captured carbon dioxide, sodium carbonate or sodium bicarbonate, which is a useful resource, is capable of being manufactured. Sodium carbonate or sodium bicarbonate may be utilized in various industrial fields, so that there is an advantage that increased economic feasibility compared to the conventional technology is secured.

In addition, according to an embodiment of the present disclosure, by dropping the basic alkali mixture solution along the gravity direction in the multiple stages in the cascade pattern, carbon dioxide in air in contact with the basic alkali mixture solution is removed, so that there is advantages that scattering of the basic alkali mixture solution is removed, a low power operation is realized, and carbon dioxide in air is reduced with high capture efficiency.

In addition, according to an embodiment of the present disclosure, by using the basic alkali mixture solution, the disadvantages of the aqueous alkanolamine solution which is a carbon dioxide absorber and which is widely used in the conventional technology are solved. Therefore, according to the present disclosure, the surrounding air is purified to be clean and comfortable, so that there is an advantage that the present invention has a low operating cost.

In addition, according to an embodiment of the present disclosure, there is an advantage that the local government or the manager is capable of being appropriately responding to the changes in the carbon dioxide concentration in air according to the capture of carbon dioxide in air.

### Description of Drawings

FIG. 1 is a front view illustrating an overall appearance of a cascaded apparatus for forming an artificial forest according to an embodiment of the present disclosure.
FIGS. 2a, 2b, and 2c are a plan view, a left side view, and a right side view of FIG. 1, respectively.
FIG. 3 is a perspective view illustrating main parts of a cascaded flow path assembly according to the present disclosure.
FIG. 4 shows a front view, a side view, and a plan view of FIG. 3.
FIGS. 5a and 5b are a perspective view of main parts and a front, a side, and a plan views separating and illustrating a partition plate in FIG. 3, respectively.

### Best Mode

Since the present disclosure may be variously modified and have several exemplary embodiments, specific exemplary embodiments will be shown in the accompanying drawings and be described in detail in the detailed description.

However, it should be understood that the specific embodiments according to the concept of the present disclosure are not limited to the embodiments which will be described hereinbelow with reference to the accompanying drawings, but all modifications, equivalents, and substitutions are included in the scope and spirit of the present disclosure.

It is to be understood that terms such as "including", "having", etc. are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

Hereinafter, the present disclosure will be described in detail.

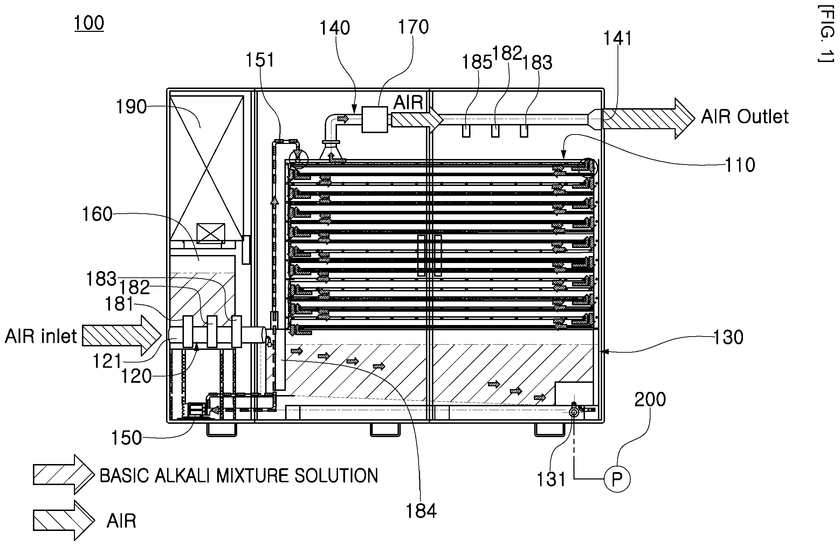

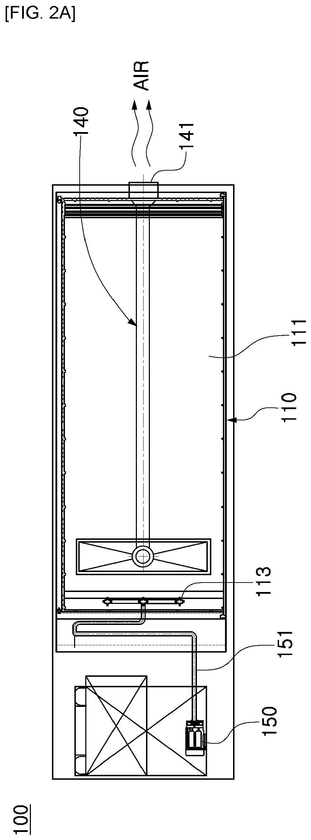

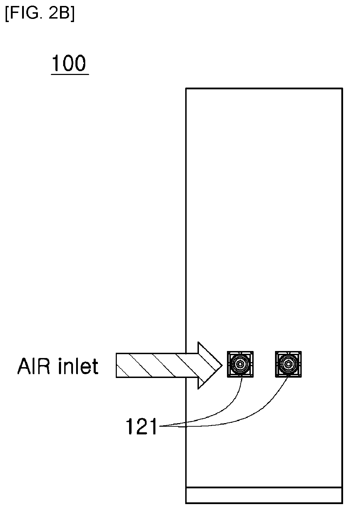

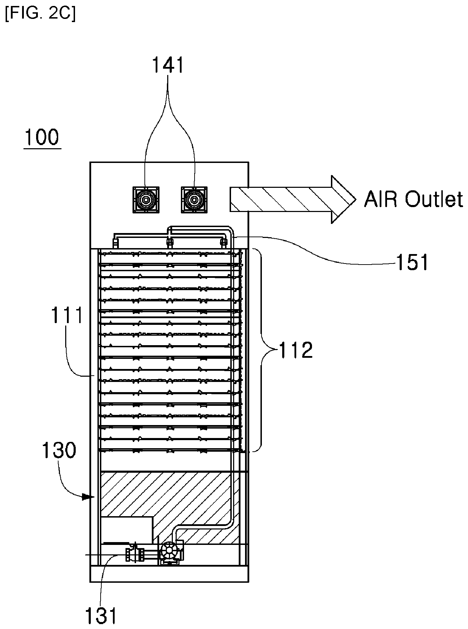

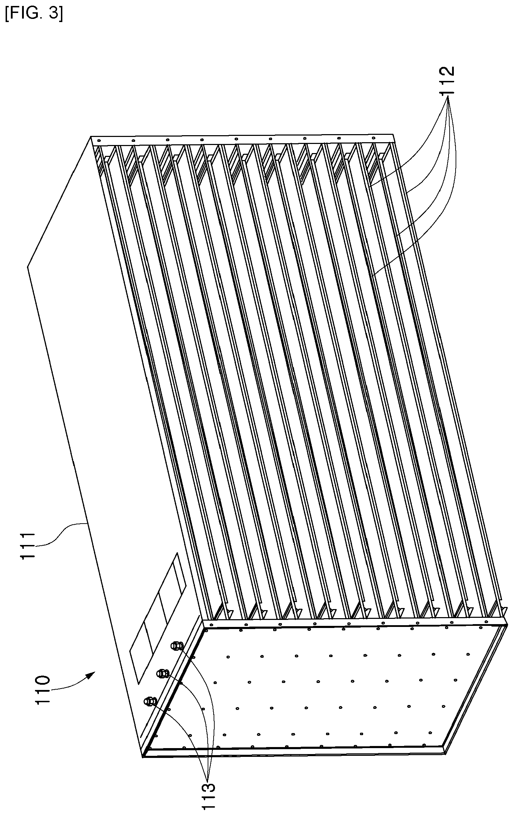

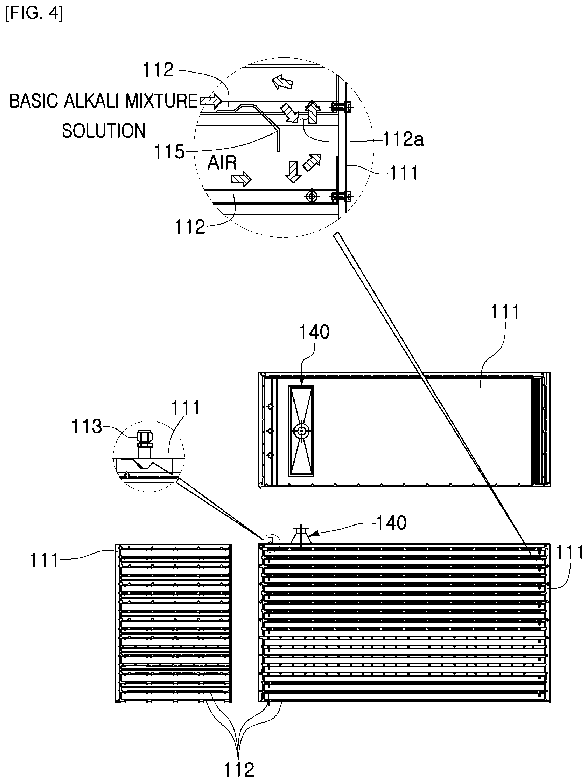

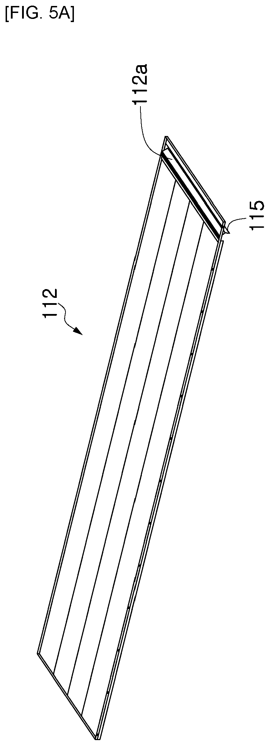

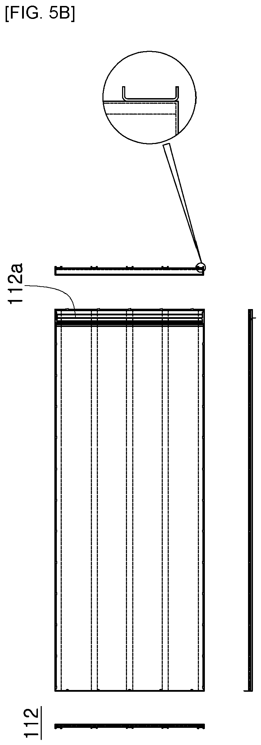

FIG. 1 is a front view illustrating an overall appearance of a cascaded apparatus for forming an artificial forest according to an embodiment of the present disclosure. FIGS. 2a, 2b, and 2c are a plan view, a left side view, and a right side view of FIG. 1, respectively. FIG. 3 is a perspective view illustrating main parts of a cascaded flow path assembly according to the present disclosure. FIG. 4 shows a front view, a side view, and a plan view of FIG. 3. FIGS. 5a and 5b are a perspective view of main parts and a front, a side, and a plan views separating and illustrating a partition plate in FIG. 3, respectively.

Referring to FIGS. 1 to 5b, a cascaded apparatus 100 for forming an artificial forest according to an embodiment of the present disclosure includes a cascaded flow path assembly 110. In the cascaded flow path assembly 110, a plurality of partition plates 112 is horizontally stacked in multiple stages in an inner portion of a casing 111 having a cuboid shape, the plurality of partition plates 112 being spaced apart from each other at a predetermined distance. Furthermore, left and right ends of the plurality of partition plates 112 are staggered with respect to each other such that the plurality of partition plates 112 is in communication with each other, so that the cascaded flow path assembly 110 has an internal flow path having a zigzag shape.

According to an embodiment, as a through-hole 112a is formed alternately in the left and right ends of each of the plurality of partition plates 112 of the cascaded flow path assembly 110 such that each through-hole 112a is staggered with respect to each other, the cascaded flow path assembly 110 has the internal flow path that generally has the zigzag shape.

A drain guide plate 115 having a first end coupled to the partition plate 112 and having a second end which has a free end shape that is bent downward via the through-hole 112a is provided at each through-hole 112a.

In addition, an air suction portion 120 which is connected to a lower first side of the cascaded flow path assembly 110 and which is configured to intake surrounding air and to guide the surrounding air suctioned along the internal flow path of the cascaded flow path assembly 110 to flow upward is provided.

According to an embodiment, in the air suction portion 120, at least one of a thermo-hygrometer 182 and a carbon dioxide concentration meter 183 that are for measuring a temperature, a humidity, or a carbon dioxide concentration value of suctioned surrounding air is mounted in the air suction portion 120, and a preheater 181 for preheating the suctioned air to a temperature suitable for a reaction with a basic alkali mixture solution is further mounted in the air suction portion 120.

For a carbon dioxide capturing reaction that will be described later, the preheater 181 serves to preheat the suctioned air.

In addition, a mixture solution storage portion 130 is provided, in which the mixture solution storage portion 130 is provided at a lower portion of the cascaded flow path assembly 110 and stores a basic alkali mixture solution of specific components capturing carbon dioxide in air by being in contact with air so that a chemical reaction occurs, the mixture solution storage portion 130 being configured to supply the basic alkali mixture solution to an upper portion of the cascaded flow path assembly 110 when air is suctioned into the air suction portion 120, and the mixture solution storage portion 130 being configured to guide the basic alkali mixture solution to be in surface contact with the air as the basic alkali mixture solution flows downward along the internal flow path of the cascaded flow path assembly 110 due to weight of the basic alkali mixture solution.

Meanwhile, the basic alkali mixture solution flows downward along the internal flow path of the cascaded flow path assembly 110 from the mixture solution storage portion 130, and then is continuously circulated back to the mixture solution storage portion 130, thereby capturing carbon dioxide in air.

More specifically, referring to FIG. 4, the basic alkali mixture solution flows downward along an upper surface of the drain guide plate 114 that is provided at the through-hole 112a of the partition plate 112. At this time, since air moves below the drain guide plate 115, the basic alkali mixture solution is continuously in contact with the air while flowing like a waterfall. That is, in this process, as the basic alkali mixture solution is in contact with the air in a direction of cutting the air, the basic alkali mixture solution collides with the air and vortexes are generated, so that the carbon dioxide capturing reaction is promoted.

In addition, the plurality of partition plates 112 may be formed by stacking rectangular stainless steel plates in multiple layers. For example, eighteen partition plates may be stacked in multiple layers at a predetermined distance. Furthermore, from any of the left end and the right end of each partition plate 112 to the through-hole 112a at other end, air and the basic alkali mixture solution respectively flows upwardly and downwardly along the internal flow path of the cascaded flow path assembly 110 in a zigzag manner, thereby being in contact with each other.

In this process, as the air introduced from the air suction portion 120 is continuously in surface contact with or in vortex contact with the basic alkali mixture solution until the air is discharged to an air discharge portion 140 by passing through the cascaded flow path assembly 110, carbon dioxide in air is captured by reacting with the basic alkali mixture solution. According to an embodiment, more than 90% of carbon dioxide in air may be removed by the cascaded apparatus 100.

A height of the basic alkali mixture solution moving on each partition plate 112 may be set to 1 mm to 10 mm. More specifically, the height may be set to 2 mm to 8 mm, 4 mm to 8 mm, 6 mm to 10 mm, or 2 mm to 6 mm. In order to maximally capture carbon dioxide according to a flow rate and a flow velocity of the air introduced from the air suction portion 120, the height of the basic alkali mixture solution flowing on each partition plate 112 may be changed according to a preset value.

In addition, the plurality of partition plates 112 may be formed in shapes having patterns. As an example, the plurality of partition plates 112 may be convex or concave in a triangular pyramid shape or a semicircular shape, and various types of patterns such as a sine wave shape, crest and trough shapes, and so on may be formed. As such, the plurality of partition plates 112 on which patterns are formed has an increased contact area with air, so that more carbon dioxide may be captured.

After then, air in which carbon dioxide is removed is finally discharged to an outside through the air discharge portion 140.

In addition, a heater (not illustrated) may further be provided at the mixture solution storage portion 130. Since sodium carbonate and so on may be precipitated when the basic alkali mixture solution stored in the mixture solution storage portion 130 is cooled to a temperature equal to or lower than a predetermined temperature, the heater serves to heat the basic alkali mixture solution so that a precipitate is not generated in the basic alkali mixture solution.

According to an embodiment, a circulation pump 150 may further be provided at the mixture solution storage portion 130, and the circulation pump 150 is configured to supply the basic alkali mixture solution stored in the mixture solution storage portion 130 to the upper portion of the cascaded flow path assembly 110 through a mixture solution supply pipe 151.

The mixture solution supply pipe 151 is connected to a plurality of mixture solution input ports 113 which will be described later and which is formed in the upper end of the cascaded flow path assembly 110. For example, at least three of the mixture solution input ports 113 may be appropriately provided so that the mixture solution is uniformly supplied according to a width of the partition plate (see FIGS. 3 and 4).

According to an embodiment, a level indicator (not illustrated) is provided inside the mixture solution storage portion 130 so that a level of the mixture solution is capable of being detected.

In addition, the air discharge portion 140 is provided at the upper portion of the cascaded flow path assembly 110, and is configured to discharge remaining air which passes through the internal flow path and in which carbon dioxide is removed to a portion around the air discharge portion 140.

According to an embodiment, at least one of a flow meter 185, the thermo-hygrometer 182, and the carbon dioxide concentration meter 183 that are for measuring a flow rate, a temperature, a humidity, or a carbon dioxide concentration value of air in which carbon dioxide is removed is mounted at the air discharge portion 140.

According to an embodiment, an air suction fan 170 is further mounted at a part of a flow path of the air discharge portion 140. The air suction fan 170 may be mounted at the air discharge portion 140 as well as the air suction portion 120.

In addition, the bottommost partition plate 112 of the cascaded flow path assembly 110 and an opened upper portion of the mixture solution storage portion 130 are in communication with each other, and the air suction portion 120 is connected to a space portion between the bottommost partition plate 112 of the cascaded flow path assembly 110 and the mixture solution storage portion 130. Therefore, after air suctioned from the outside is in contact with the basic alkali mixture solution contained in the mixture solution storage portion 130, the air is guided to flow upward along the internal flow path through the through-hole 112a of the bottommost partition plate 112 of the cascaded flow path assembly 110.

In addition, a makeup water storage portion 160 for supplementing water evaporated from the basic alkali mixture solution is further provided at a first side of the mixture solution storage portion 130.

Accordingly, when water level is lowered as water is naturally evaporated from the basic alkali mixture solution stored in the mixture solution storage portion 130, water is supplemented to the mixture solution storage portion 130 from the makeup water storage portion 160.

At this time, the water level is detected by using the level indicator provided at the mixture solution storage portion 130, and water is supplemented to the mixture solution storage portion 130 from the makeup water storage portion 160 according to a preset condition.

In addition, a carbon dioxide concentration value in a before stage in which carbon dioxide in air suctioned through the air suction portion 120 is captured and a carbon dioxide concentration value in an after stage in which carbon dioxide in remaining air is captured after the remaining air is reacted with the basic alkali mixture solution stored in the mixture solution storage portion 130 so that carbon dioxide is removed and then the remaining air is discharged through the air discharge portion 140 are measured and compared with each other, and then the supply amount of water supplemented to the mixture solution storage portion 130 is adjusted.

The mixture solution storage portion 130 may maintain a basic alkali solution and water supplied from the makeup water storage portion 160 in a ratio of 1:1 to 1:5. For example, the basic alkali solution and water may be maintained at a ratio of 1:1 to 1:4, 1:1 to 1:3, 1:1 to 1:2, 1:2 to 1:5, 1:2 to 1:3, or 1:3 to 1:5.

A carbon dioxide capture efficiency in air may be increased as the proportion of the basis alkali solution in the basic alkali solution and water is increased, but the proportion of the water may be adjusted in consideration of the cost aspect.

The basic alkali mixture solution includes; at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The average pH of the basic alkali mixture solution may be at least pH 12. For example, the pH may be pH 12 to pH 13.5, pH 13, pH 12, pH 12.1, pH 12.2, or pH 12.3. As described above, the pH of the basic alkali mixture solution may be measured by using a pH meter 184 in the mixture solution storage portion 130.

When the pH of the basic alkali mixture solution in the mixture solution storage portion 130 is less than 10.5, carbon dioxide will no longer be captured. Therefore, carbon dioxide reactants and a waste solution are discharged through a discharge port 131 provided at a lower portion of the mixture solution storage portion 130, and a new basic alkali mixture solution is supplied through the discharge port 131.

to this end, a pump 200 is provided at the first side of the mixture solution storage portion 130.

The pump 200 is configured to discharge carbon dioxide reactants and a waste solution through the discharge port 131, and is configured to supply a new basic alkali mixture solution through the discharge port 131 in which the new basic alkali mixture solution is generated by mixing a basic alkali solution and water.

At this time, since the pH meter 184 is provided at the mixture solution storage portion 130, whether the pH of the basic alkali mixture solution stored in the mixture solution storage portion 130 is maintained to an appropriate pH of 12 to 13.5 is monitored.

Meanwhile, when a level of the basic alkali mixture solution in the mixture solution storage portion 130 is lowered to less than 90%, a basic alkali mixture solution is supplied to the mixture solution storage portion 130 through a valve (not illustrated) by using the pump 200, and the supply is stopped when the level of the basic alkali mixture solution reaches 100%.

Meanwhile, although not illustrated in the drawings, a separator (not illustrated) configured to collect a reactant including carbon dioxide captured in the basic alkali mixture solution and configured to separate a carbon dioxide reactant and a waste solution from the reactant and a carbon resource reservoir (not illustrated) storing the separated carbon dioxide reactant so as to recycle the carbon dioxide reactant may further be connected to the mixture solution storage portion 130.

Accordingly, the carbon dioxide reactant and the waste solution that are discharged to the outside through the discharge port 131 of the mixture solution storage portion 130 may be supplied to the separator (not illustrated), and then the carbon dioxide reactant and the waste solution may be separated from each other. For example, the separator (not illustrated) may be configured to perform separation by using a centrifugal separation method.

In addition, the carbon dioxide reactant separated by the separator may be recycled as a resource for other uses after the carbon dioxide reactant is supplied to and stored in the carbon resource reservoir. For example, the carbon dioxide reactant may include sodium carbonate (Na₂CO₃) or sodium bicarbonate (NaHCO₃).

The cascaded apparatus for forming the artificial forest of the present disclosure as described above is capable of being easily mounted and moved on land. When the cascaded apparatus for forming the artificial forest is mounted on land, a place for storing the carbon dioxide reactant is easily secured. Therefore, the carbon dioxide reactant may be separated and stored in the carbon resource reservoir (not illustrated) for recycling the carbon dioxide reactant as a resource for other useful materials.

As described in <Formula 1> below, the carbon dioxide reactant may be formed by reacting a basic alkali mixture solution with carbon dioxide.

<Formula 1> 2NaOH + CO₂ → Na₂CO₃ + H₂O Na₂CO₃ + H₂O + CO₂ → 2NaHCO₃

In the reactant, a waste solution other than a carbon dioxide reactant is moved to a wastewater treatment tank (not illustrated) and then is discarded. For example, the waste solution may include illite minerals, water, and so on that are contained in the basic alkali mixture solution that has finished a catalyst function.

In addition, air supplied through the air suction portion 120 and the basic alkali mixture solution stored in the mixture solution storage portion 130 are in surface contact with each other so that the reaction occurs and carbon dioxide is captured, and then the remaining air in which carbon dioxide is removed is discharged to through the air discharge portion 140. For example, the remaining air discharged through the air discharge portion 140 may include air in which carbon dioxide is removed and some small amounts of uncaptured carbon dioxide. Here, the remaining air may be air with a carbon dioxide content of less than 10%.

In addition, an anti-insect net may further be mounted at an air suction port 121 and an air discharge port 141 (see FIGS. 2b and 2c).

Meanwhile, the cascaded apparatus for forming the artificial forest according to the present disclosure may include an electric compartment portion 190.

The electric compartment portion 190 is configured to monitor and manage data which are received from the thermo-hygrometer 182, the flow meter 185, the pH meter 184, and so on and which are measured in all processes of the cascaded apparatus for forming the artificial forest. Furthermore, on the basis of the data, the electric compartment portion 190 is configured to control opening and closing of various valves of the circulation pump 150, the air suction fan 170, the mixture solution storage portion 130, and the makeup water storage portion 160.

That is, the electric compartment portion 190 may control flow rates and flow velocities of air and the basic alkali mixture solution on the basis of the data measured by various sensors.

In addition, when a user input a carbon dioxide capture date, a time, a measurement interval, a measurement start time for measuring a carbon dioxide concentration value, a measurement end time to end the measurement of the carbon dioxide concentration value, a measurement period, and the atmospheric pressure through the electric compartment portion 190, the electric compartment portion 190 may control the operation of each part of the cascaded apparatus for forming the artificial forest of the present disclosure on the basis of the input values.

In addition, the electric compartment portion 190 may store various data measured by the sensors in a database. Specifically, the data may include carbon dioxide emissions before carbon dioxide is captured, carbon dioxide emissions after carbon dioxide is captured, the carbon dioxide capture amount for a preset period, the carbon dioxide capture amount per hour, and the predicted amount of carbon dioxide capture amount for a predetermined period in the future.

In addition, the electric compartment portion 190 may remotely transmit the stored and itemized data to a server or a terminal that the user wants in real time or at a predetermined period. Accordingly, by using a communication device including a server, a smartphone, a computer terminal, a local government or a manager in a region where the cascaded apparatus for forming the artificial forest of the present disclosure may remotely and always check changes in the capture amount of carbon dioxide and the predicted amount of carbon dioxide capture amount for a predetermined period in the future according to the operation of the cascaded apparatus for forming the artificial forest.

Although embodiments of the present disclosure have been described for illustrative purposes, those skilled in the art will appreciate that various modifications, additions and substitutions are possible, without changing the spirit or essential features of the present disclosure. Therefore, it should be understood that, in every aspect, the embodiments described above are examples and are not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### INDUSTRIAL APPLICABILITY

The present disclosure may provide an apparatus for forming an artificial forest, the apparatus being capable of efficiently reducing carbon dioxide emitted into air and also being capable of recycling carbon dioxide into other useful materials, and the apparatus being capable of continuously supplying a clean air that is artificially purified.

In addition, according to the present disclosure, since a local government or a manager in a jurisdiction may easily check changes in carbon dioxide concentration value before and after carbon dioxide is captured, the local government or the manager in the jurisdiction may appropriately use the checked values or may appropriately respond to the changes in carbon dioxide concentration value.

Since the possibility of marketing or sales of the apparatus for forming the artificial forest to governments and local governments of each country that are making various efforts to reduce greenhouse gas emissions is not only sufficient and is also practically achievable, the present disclosure has industrial applicability.

## Claims

1. A cascaded apparatus for forming an artificial forest, the cascaded apparatus comprising:
a cascaded flow path assembly having a plurality of partition plates horizontally stacked in multiple stages in an inner portion of a casing having a cuboid shape, the plurality of partition plates being spaced apart from each other at a predetermined distance, the plurality of partition plates having left and right ends staggered with respect to each other such that the plurality of partition plates is in communication with each other, and the cascaded flow path assembly formed thereby having an internal flow path that has a zigzag shape;
an air suction portion connected to a lower first side of the cascaded flow path assembly and configured to intake surrounding air, thereby guiding suctioned air to flow upward along the internal flow path;
a mixture solution storage portion which is provided at a lower portion of the cascaded flow path assembly and which stores a basic alkali mixture solution of specific components capturing carbon dioxide in air by being in contact with air so that a chemical reaction occurs, the mixture solution storage portion being configured to supply the basic alkali mixture solution to an upper portion of the cascaded flow path assembly when air is suctioned into the air suction portion, and the mixture solution storage portion being configured to guide the basic alkali mixture solution to be in contact with the air as the basic alkali mixture solution flows downward along the internal flow path of the cascaded flow path assembly due to weight of the basic alkali mixture solution; and
an air discharge portion provided at the upper portion of the cascaded flow path assembly and configured to discharge remaining air which passes through the internal flow path and in which carbon dioxide is removed to a portion around the air discharge portion.

2. The cascaded apparatus of claim 1, wherein the mixture solution storage portion is further provided with a circulation pump, and the circulation pump is configured to supply the basic alkali mixture solution stored in the mixture solution storage portion to the upper portion of the cascaded flow path assembly through a mixture solution supply pipe.

3. The cascaded apparatus of claim 1, wherein, as a through-hole is formed alternately in the left and right ends of each of the plurality of partition plates of the cascaded flow path assembly such that each through-hole is staggered with respect to each other, the cascaded flow path assembly has the internal flow path that generally has the zigzag shape, and a drain guide plate having a first end coupled to each of the plurality of partition plates and having a second end which has a free end shape that is bent downward via the through-hole is provided at each through-hole.

4. The cascaded apparatus of claim 1, wherein a pattern is formed on the plurality of partition plates of the cascaded flow path assembly, so that a contact area between the basic alkali mixture solution and the suctioned air is increased.

5. The cascaded apparatus of claim 1, wherein the air suction portion is provided with at least one of a thermometer, a hygrometer, and a carbon dioxide concentration meter that are for measuring a temperature, a humidity, or a carbon dioxide concentration value of suctioned surrounding air, and is further provided with a preheater for preheating the suctioned air to a temperature suitable for a reaction with the basic alkali mixture solution.

6. The cascaded apparatus of claim 1, wherein the air discharge portion is provided with at least one of a flow meter, a thermometer, a hygrometer, and a carbon dioxide concentration meter that are for measuring a flow rate, a temperature, a humidity, or a carbon dioxide concentration value of air in which carbon dioxide is removed.

7. The cascaded apparatus of claim 1, wherein a first side of the mixture solution storage portion is further provided with a makeup water storage portion for supplementing water evaporated from the basic alkali mixture solution.

8. The cascaded apparatus of claim 1, wherein an air suction fan is further mounted at a part of a flow path of the air discharge portion or the air suction portion.

9. The cascaded apparatus of claim 1, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

10. The cascaded apparatus of claim 1, wherein a carbon dioxide reactant comprises sodium carbonate (Na₂CO₃) or sodium bicarbonate (NaHCO₃).

11. The cascaded apparatus of claim 1, wherein a bottommost of the plurality of partition plates of the cascaded flow path assembly and an opened upper portion of the mixture solution storage portion are in communication with each other, and the air suction portion is connected to a space portion between the bottommost of the plurality of partition plates of the cascaded flow path assembly and the mixture solution storage portion, so that air is guided to flow upward along the internal flow path through a through-hole of the bottommost of the plurality of partition plates of the cascaded flow path assembly after air suctioned from an outside is in contact with the basic alkali mixture solution contained in the mixture solution storage portion.

12. The cascaded apparatus of claim 1, wherein the mixture solution storage portion is further connected to a separator configured to collect a reactant comprising carbon dioxide captured in the basic alkali mixture solution and configured to separate a carbon dioxide reactant and a waste solution from the reactant, and is further connected to a carbon resource reservoir storing the carbon dioxide reactant that is separated so as to be recycled.

13. The cascaded apparatus of claim 1, wherein an electric compartment portion is further provided at a first side of the cascaded flow path assembly, and the electric compartment portion is configured to measure and control various parameter values comprising temperatures, humidities, flow rates, flow velocities, concentrations of air, and the basic alkali mixture solution that are suctioned, supplied, or discharged through the cascaded flow path assembly.

14. The cascaded apparatus of claim 13, wherein the electric compartment portion is further connected to various sensors and a database, and is configured to store data measured by the various sensors in the database or to remotely transmit the data to a server or a terminal that a user wants in real time or at a predetermined period.
